# EUROPEAN PATENT APPLICATION

(11) **EP 4 811 705 A1**
(43) Date of publication of application: **23.09.2026**
(21) Application number: 24892844.2
(22) Date of filing: 18.07.2024
(51) Int. Cl.: H04L 5/00

(54) **REFERENCE SIGNAL CONFIGURATION METHOD, COMMUNICATION DEVICE AND STORAGE MEDIUM**

(30) Priority: 22.11.2023 CN 202311574810
(71) Applicant: ZTE CORPORATION, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LIU, Kun, Shenzhen, Guangdong 518057 (CN); LI, Yong, Shenzhen, Guangdong 518057 (CN); LI, Lun, Shenzhen, Guangdong 518057 (CN); LIU, Wenfeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/106207
(87) International publication number: WO 2025/107680

(57) **Abstract**

Embodiments of the present disclosure relates to the technical field of communications, and provide a reference signal configuration method, a communication device and a storage medium. The communication method comprises: obtaining configuration information of reference signals, the configuration information of the reference signals comprising description information of X reference signals, and X being a positive integer, and sending the X reference signals on the basis of the configuration information of the reference signals.

## Description

### CROSS-REFERENCE TO RELATED APPLICATION(S)

This application claims priority to Chinese Patent Application No. 202311574810.3, filed with the China National Intellectual Property Administration on November 22, 2023, entitled "REFERENCE SIGNAL CONFIGURATION METHOD, COMMUNICATION DEVICE AND STORAGE MEDIUM", which is incorporated herein by reference in its entirety.

### TECHNICAL FIELD

The present disclosure relates to the field of communication technologies, and in particular, to a reference signal configuration method, a communication device and a storage medium.

### BACKGROUND

Multi-antenna technologies have been widely used in various wireless communication technologies. The multi-antenna technologies include multiple-input multiple-output (MIMO), joint transmission (JT) by multiple transmission nodes, and highfrequency beamforming. In order to fully utilize the performance of multiple antennas, it is crucial for communication nodes to acquire accurate channel information. Currently, in the field of multi-antenna technologies, channel state information reference signal (CSI-RS) may be used for operations such as channel measurement, channel prediction, codebook feedback, and precoding, so that the network may be dynamically adjusted and optimized according to the real-time channel state. However, in general, terminals may only perform CSI-RS reception and measurement based on relatively fixed configuration information from a network side, resulting in poor flexibility in usage.

### SUMMARY

In a first aspect, a reference signal configuration method is provided in the present disclosure. The method includes: acquiring reference signal configuration information, the reference signal configuration information including description information of X reference signals, and X being a positive integer; and sending the X reference signal based on the reference signal configuration information.

In a second aspect, another reference signal configuration method is provided in the present disclosure. The method includes: receiving X reference signals. The X reference signals are generated based on reference signal configuration information. The reference signal configuration information includes description information of the X reference signals, and X is a positive integer.

In some embodiments, the reference signal configuration information is indicated by S pieces of signaling. The S pieces of signaling include at least one of radio resource control (RRC) signaling, media access control (MAC) signaling, or downlink control information (DCI), and S is a positive integer.

In some embodiments, the description information includes at least one of: identification information of the X reference signals; resource information of the X reference signals; sequence information of the X reference signals; power information of the X reference signals; quantity information of ports corresponding to the X reference signals; relationship information between the ports corresponding to the X reference signals and other ports of a transmitting end; relationship information between ports corresponding to different reference signals of the X reference signals; transmission priority information of all or some of the X reference signals; indication information of a feedback mode for feedback information determined based on the X reference signals; description information of a processing mode for all or some of the X reference signals at a receiving end; indication information of a selection rule for the receiving end to select the processing mode; description information of a selection rule for selecting a target reference signal from the X reference signals; indication information of the number of the target reference signals; or indication information for feeding back a maximum amount of data determined based on the X reference signals.

In some embodiments, the relationship information between the ports corresponding to the X reference signals and the other ports of the transmitting end includes: a mapping relationship between the ports corresponding to the X reference signals and the other ports.

In some embodiments, the feedback mode includes independent feedback or joint feedback.

In some embodiments, the processing mode includes a linear processing mode and/or a nonlinear processing mode.

In some embodiments, the processing mode is determined based on the power information of the reference signal.

In some embodiments, the selection rule for selecting the processing mode is determined based on at least one of channel quality information or channel reconstruction quality information.

In some embodiments, the selection rule for selecting the target reference signal from the X reference signals includes constraint information for selecting the target reference signal.

In some embodiments, the X reference signals are determined from a set of G groups of reference signals, and G is a positive integer.

In some embodiments, different reference signals of the X reference signals correspond to the same number of ports.

In some embodiments, different reference signals of the X reference signals correspond to different numbers of ports.

In some embodiments, a reference signal occupies resources of the same size on different ports.

In some embodiments, a reference signal occupies resources of different sizes on different ports.

In some embodiments, ports respectively corresponding to at least two reference signals of the X reference signals overlap with each other.

In some embodiments, time-domain resources occupied by the X reference signals overlap with time-domain resources occupied for transmitting other signals.

In some embodiments, frequency-domain resources occupied by the X reference signals overlap with frequency-domain resources occupied by other signals.

In some embodiments, channel state information generated based on different reference signals of the X reference signals includes different numbers of elements.

In some embodiments, channel state information generated based on the X reference signals includes N parts, and N is a positive integer.

In a third aspect, a communication device is provided in the present disclosure. The communication device includes: an acquiring module configured to acquire reference signal configuration information, where the reference signal configuration information includes description information of X reference signals; and a sending module configured to send the X reference signals based on the reference signal configuration information.

In a fourth aspect, another communication device is provided in the present disclosure. The communication device includes: a receiving module configured to receive X reference signals. The X reference signals are generated based on reference signal configuration information. The reference signal configuration information includes description information of the X reference signals, and X is a positive integer.

In a fifth aspect, a communication device is further provided in the present disclosure. The communication device includes: a memory and a processor. The memory is coupled to the processor. The memory is configured to store instructions executable by the processor. The processor, upon executing the instructions, performs any method provided in the first aspect or the second aspect.

In a sixth aspect, a computer program product including computer instructions is provided in the present disclosure. The computer instructions, upon being executed on a computer, enable the computer to perform any method provided in the first aspect or the second aspect.

### BRIEF DESCRIPTION OF THE DRAWINGS

FIG. 1 is a schematic diagram showing an architecture of a communication system provided in embodiments of the present disclosure;
FIG. 2 is a flow chart of a reference signal configuration method provided in embodiments of the present disclosure;
FIG. 3 is a schematic diagram of an antenna port provided in embodiments of the present disclosure;
FIG. 4 is a schematic diagram showing a topology structure of a system provided in embodiments of the present disclosure;
FIG. 5 is a schematic diagram of a transmission resource provided in embodiments of the present disclosure;
FIG. 6 is a schematic diagram of another transmission resource provided in embodiments of the present disclosure;
FIG. 7 is a flow chart of another reference signal configuration method provided in embodiments of the present disclosure;
FIG. 8 is a schematic diagram showing components of a communication device provided in embodiments of the present disclosure;
FIG. 9 is a schematic diagram showing components of another communication device provided in embodiments of the present disclosure; and
FIG. 10 is a schematic diagram showing a structure of a communication device provided in embodiments of the present disclosure.

### DETAILED DESCRIPTION

The technical solutions in the embodiments of the present disclosure are clearly and completely described below with reference to the accompanying drawings in the embodiments of the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships, for example, "A and/or B" may mean: only A, A and B at the same time, and only B. In addition, the term such as "at least one" means one or more, and the term such as "a/the plurality of" means two or more. Terms such as "first" and "second" do not limit the number and execution order, and do not necessarily indicate that the objects defined by the terms are different.

It will be noted that, in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a specific manner.

In order to improve the flexibility of channel state information reference signal configuration, a reference signal configuration method is provided in the present disclosure. The method includes: acquiring reference signal configuration information, the reference signal configuration information including description information of X reference signals, and X being a positive integer; and sending the X reference signals based on the reference signal configuration information. In this way, the description information of the X reference signals may be determined based on an actual radio channel environment, and adaptive reference information configuration may be performed based on the actual radio channel environment.

A channel state information reference signal (CSI-RS) is an important element of mobile communication networks. The CSI-RS may provide essential channel state information, which serves as a foundation for dynamic adjustment and optimization of the network, thereby helping to improve the efficiency and reliability of wireless communication.

The CSI-RS may be used for channel sounding and radio channel characteristic measurement, including specific operations such as channel measurement, channel prediction, codebook feedback, and precoding. The CSI-RS plays an important role in mobile communication networks, so that the network may be dynamically adjusted and optimized according to the real-time channel state, thereby achieving more efficient and reliable wireless communication.

In some examples, a transmitting end device may transmit the CSI-RS to a receiving end device on a physical layer via predefined time-frequency resources. The predefined time-frequency resources refer to time-frequency resources that are pre-allocated to the receiving end device for measuring channel quality and feedback information. Correspondingly, after receiving the CSI-RS, the receiving end device may measure the channel and calculate feedback information, and send, to the transmitting end device, feedback information about channel quality, such as channel quality, number of layers, and precoding. Furthermore, the transmitting end device may optimize its transmission mode based on the feedback information sent by the receiving end device, to improve channel transmission efficiency and reliability.

In addition, multiple factors, such as signal power, sequence design, and allocation mode, need to be considered in the design of the CSI-RS, to ensure that sufficient reference information may be provided to support operations such as channel measurement, channel prediction, codebook feedback, and precoding. Meanwhile, interference and coordination with other signals and channels also need to be considered in the design of the CSI-RS, to ensure the performance and stability of the entire wireless communication system.

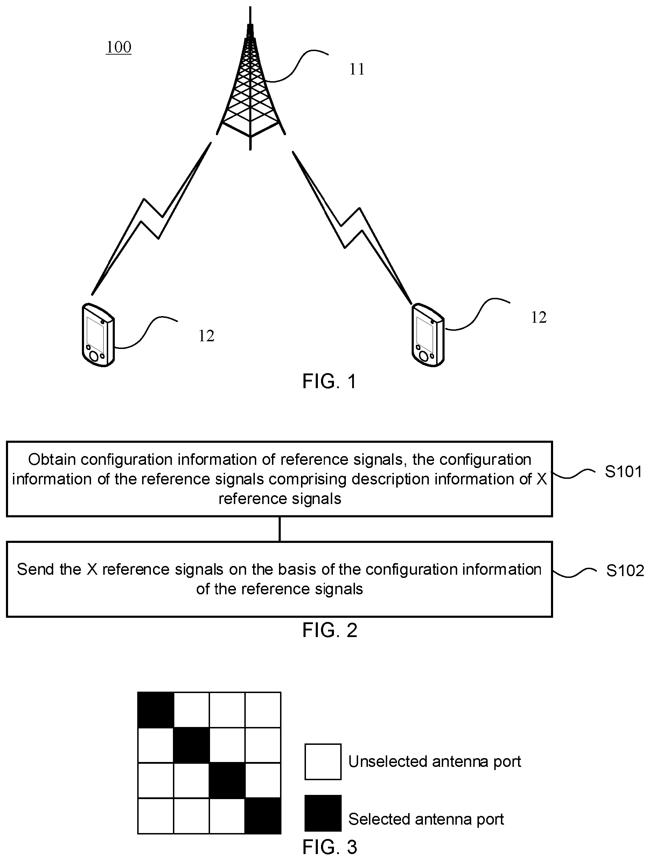

The method provided in the embodiments of the present disclosure may be applied to various communication systems. For example, the communication system may be a long term evolution (LTE) system, a 5th generation (5G) communication system, a Wi-Fi system, a 3rd generation partnership project (3GPP)-related communication system, a future evolved communication system (e.g., a 6th generation (6G) communication system), or a system integrating multiple systems, which is not limited thereto. The method provided in the embodiments of the present disclosure is described below by considering a communication system 100 shown in FIG. 1 as an example. FIG. 1 is merely a schematic diagram and does not constitute a limitation on the applicable scenarios of the technical solutions provided in the present disclosure.

FIG. 1 is a schematic diagram showing an architecture of a communication system provided in the embodiments of the present disclosure. As shown in FIG. 1, the communication system 100 may include one or more network devices 11 and one or more terminal devices 12. The terminal device 12 may be communicatively connected with one or more network devices 11.

In some embodiments, the network device 11 may be used to implement functions such as resource scheduling, radio resource management, and radio access control of terminal devices. For example, the network device 11 may include an evolution node B (eNB) , a next generation node B (gNB), a transmission receive point (TRP) , a transmission point (TP), and any other access node. The base station may be further classified, according to a size of a service coverage area provided by the base station, into a macro base station for providing a macro cell, a pico base station for providing a pico cell, and a femto base station for providing a femto cell. With the continuous evolution of wireless communication technologies, future base stations may also adopt other names.

The terminal device 12 may also be referred to as a terminal, user equipment (UE), a mobile station, or a mobile terminal, etc. For example, the terminal device 12 may be a mobile phone, a tablet computer, a computer with a wireless transceiving function, a virtual reality terminal, an augmented reality terminal, a wireless terminal in industrial control, a wireless terminal in self driving, a wireless terminal in remote surgery, a wireless terminal in transportation safety, a wireless terminal in a smart city, or a wireless terminal in a smart home. The embodiments of the present disclosure do not impose any limitation on a specific device form adopted by the terminal.

In some embodiments, in a communication process, if the network device sends data to the terminal device and the terminal device receives the data sent by the network device, the network device may be referred to as a transmitting end, and correspondingly, the terminal device may be referred to as a receiving end. Alternatively, if the terminal device sends data to the network device, the network device may be referred to as the receiving end, and correspondingly, the terminal device may be referred to as the transmitting end.

It will be noted that, FIG. 1 is only an exemplary architecture diagram, and the number of devices or nodes and names of the various devices included in FIG. 1 are not limited, and in addition to the functional nodes shown in FIG. 1, the communication system may further include other nodes or devices, such as a core network device.

The system architectures and the service scenarios described in the embodiments of the present disclosure are intended to more clearly explain the technical solutions in the embodiments of the present disclosure, and do not constitute a limitation on the technical solutions provided in the embodiments of the present disclosure. Those of ordinary skill in the art will know that, with the evolution of network architectures and the emergence of new service scenarios, the technical solutions provided in the embodiments of the present disclosure are also applicable to similar technical problems.

The embodiments provided in the present disclosure are specially introduced below in conjunction with the drawings provided herein.

As shown in FIG. 2, a reference signal configuration method is provided in the present disclosure. The method is applied to a transmitting end device and includes the following steps.

In S101, reference signal configuration information is acquired, the reference signal configuration information includes description information of X reference signals.

Herein, X is a positive integer. In some embodiments, the X reference signals belong to a set of G groups of reference signals, where G is an integer greater than or equal to 1.

In addition, the reference signal provided in the present disclosure includes a plurality of types of reference signals, such as a channel state information reference signal, a demodulation reference signal (DMRS), a phase tracking reference signal (PTRS), and a sounding reference signal (SRS).

In some embodiments, the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of the maximum number of the target reference signals; or
indication information for feeding back a maximum amount of data determined based on the X reference signals.

Each item in description information of the X reference signals is described below in detail.

### (1) Identification information of the X reference signals

Identification information of a reference signal may be used to indicate information on parameters related to the reference signal (e.g., the channel state information reference signal) between the transmitting end device and receiving end device, so as to enable the receiving end device or the transmitting end device to identify the related parameters of the channel state information reference signal.

Therefore, the description information of the reference signal to be transmitted by the transmitting end device may include the identification information of the reference signal. Since the reference signal configuration information includes the description information of the X reference signals, the reference signal configuration information may include the identification information of the X reference signals. In addition, the identification information may also be carried in a process of channel state information feedback.

### (2) Resource information of the X reference signals

Resource information of a reference signal may include information for describing a resource location for receiving the reference signal (e.g., the channel state information reference signal). For example, the resource location may be determined based on a slot position, an orthogonal frequency-division multiplexing (OFDM) symbol position, or a subcarrier position.

In other words, the receiving end device may, based on resource information of the reference signal (e.g., the channel state information reference signal), notify the receiving end device to receive the channel state information reference signal at the resource location corresponding to the resource information. Moreover, since the reference signal configuration information includes the description information of the X reference signals, the reference signal configuration information may include the resource information of the X reference signals.

In some embodiments, a reference signal occupies resources of the same size on different ports.

In some embodiments, a reference signal occupies resources of different sizes on different ports.

### (3) Sequence information of the X reference signals

Sequence information of a reference signal is used to describe a sequence corresponding to the reference signal (e.g., the channel state information reference signal). Moreover, since the reference signal configuration information includes the description information of the X reference signals, the reference signal configuration information may include the sequence information of the X reference signals.

For example, the sequence information of the reference signal may include a sequence generation mode of the sequence corresponding to the reference signal. The sequence generation mode of the sequence corresponding to the reference signal includes a maximum length linear feedback shift register sequence (also referred to as an m-sequence), Gold codes (also referred to as a Gold sequence), a CHU sequence (or Chu sequence), a Zadoff-Chu sequence (also referred to as a ZC sequence), a chirp sequence (also referred to as a CHIRP sequence), a mode obtained through calculation and searching according to specific criteria, a mode in which an output is obtained by performing linear or non-linear processing on a specific input, a mode obtained by processing based on some useful data bits, or other possible modes.

In some embodiments, the sequence information of the X reference signals satisfies at least one of the following:
a sequence generation mode used by each of the X reference signals is the same;
a sequence generation mode used by each of the X reference signals is different;
sequence generation modes used by some of the X reference signals are different;
for each of the X reference signals, sequence generation modes used on a plurality of antenna ports transmitting the reference signal are the same;
for each of the X reference signals, sequence generation modes used on the plurality of antenna ports transmitting the reference signal are different; or
for each of the X reference signals, sequence generation modes used on some of the plurality of antenna ports transmitting the reference signal are different.

In an example, in the X reference signals, a sequence generation mode used by at least one reference signal includes the m-sequence, a sequence generation mode used by at least one reference signal includes the Gold sequence, and a sequence generation mode used by at least one reference signal includes the ZC sequence.

In another example, for each of the X reference signals, in a plurality of antenna ports transmitting the reference signal, a sequence generation mode used on at least one antenna port includes the m-sequence, a sequence generation mode used on at least one antenna port includes the Gold sequence, and a sequence generation mode used on at least one antenna port includes the ZC sequence.

In some embodiments, the sequence information of the reference signal may further include a sequence length and sequence content.

### (4) Power information of the X reference signals

Power information of a reference signal may include a transmission power for transmitting the reference signal (e.g., the channel state information reference signal). Moreover, since the reference signal configuration information includes the description information of the X reference signals, the reference signal configuration information may include the power information of the X reference signals.

In some embodiments, for the X reference signals, transmission powers of different reference signals (e.g., the channel state information reference signals) may be the same; alternatively, transmission powers of different reference signals may be different. For example, in a distributed multi-antenna system, transmission powers of reference signals corresponding to nodes at different locations or of different types may be different. In addition, a power value of the transmission power described above may be expressed in the form of an absolute value or a relative value.

### (5) Quantity information of ports corresponding to the X reference signals

Quantity information of ports corresponding to a reference signal is the number of antenna ports carrying the reference signal (e.g., the channel state information reference signal). Moreover, since the reference signal configuration information includes the description information of the X reference signals, the reference signal configuration information may include the quantity information of the ports corresponding to the X reference signals. For example, the quantity information of the ports corresponding to the reference signal may include 2, 4, 8, 16, 24, 32, 64, 128, or 256.

In some embodiments, different reference signals of the X reference signals correspond to the same number of ports.

In some embodiments, different reference signals of the X reference signals correspond to different numbers of ports.

### (6) Relationship information between ports corresponding to the X reference signals and other ports of the transmitting end

In some embodiments, the relationship information between ports corresponding to the X reference signals and other ports of the transmitting end includes: a mapping relationship between the ports corresponding to the X reference signals and the other ports. For one of the X reference signals, the description information of the reference signal includes relationship information between an antenna port used to carry the reference signal and the other antenna ports.

For example, in an example where the reference signal includes the channel state information reference signal, and the transmitting end device includes a large-scale multiple-input multiple-output (massive MIMO) base station, the massive MIMO base station has 256 physical antennas, of which 64 physical antennas form a channel state information reference signal containing 64 antenna ports. Therefore, the transmitting end device needs to send, to the receiving end device, a mapping relationship between these 64 physical antennas and all 256 physical antennas. As shown in FIG. 3, each box represents 16 antenna ports, and the black boxes represent the 64 antenna ports corresponding to X channel state information reference signals selected from the 256 antenna ports.

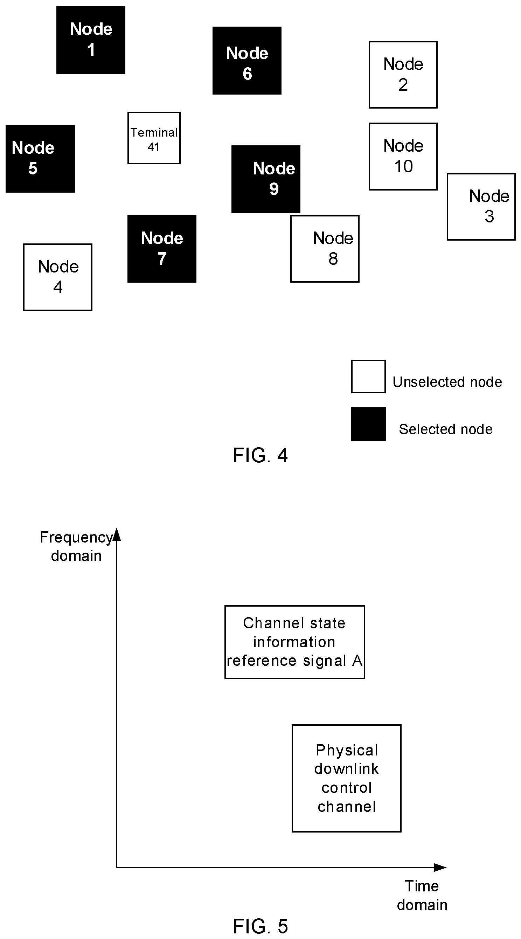

For another example, as shown in FIG. 4, there are ten nodes serving a receiving end device (e.g., the terminal 41) in a distributed base station system. Five nodes may be selected from these ten nodes based on a topology network of the system, to form a channel state information reference signal containing 32 antenna ports. Therefore, the transmitting end device needs to send, to the receiving end device, a topological relationship between the selected five nodes and all ten nodes.

### (7) Relationship information between ports corresponding to different reference signals of the X reference signals

In some embodiments, the description information of the X reference signals may include relationship information between antenna ports corresponding to different reference signals (e.g., different channel state information reference signals).

For example, four antenna ports corresponding to a CSI-RS A include an antenna port P0, an antenna port P1, an antenna port P2, and an antenna port P3, and four antenna ports corresponding to a CSI-RS B include the antenna port P2, the antenna port P3, an antenna port P4, and an antenna port P5. Thus, the relationship information may be used to indicate that the two reference signals (i.e., the CSI-RS A and the CSI-RS B) share common antenna ports P2 and P3. For another example, four antenna ports corresponding to a CSI-RS C include an antenna port P0, an antenna port P1, an antenna port P2, and an antenna port P3, and four antenna ports corresponding to a CSI-RS D include an antenna port P7, an antenna port P8, an antenna port P9, and an antenna port P10. Thus, the relationship information may be used to indicate a mapping relationship between the antenna ports corresponding to the two reference signals (i.e., the CSI-RS C and the CSI-RS D), that is, a mapping relationship between the eight antenna ports: P0, P1, P2, P3 and P7, P8, P9, P10.

### (8) Transmission priority information of all or some of the X reference signals

Transmission priority information of a reference signal is used to indicate information on a transmission priority rule between the reference signal (e.g., the channel state information reference signal) and other signals or channels. Moreover, the reference signal configuration information may include transmission priority information of Y reference signals, where Y is less than or equal to X.

In some embodiments, ports respectively corresponding to at least two reference signals of the X reference signals overlap with each other. For example, antenna ports respectively corresponding to different channel state information reference signals may partially overlap with each other.

In some embodiments, time-domain resources occupied by the X reference signals overlap with time-domain resources occupied for transmitting other signals.

For example, as shown in FIG. 5, a reference signal (e.g., the channel state information reference signal A) and a physical downlink control channel (PDCCH) (or a physical downlink shared channel (PDSCH), a synchronization signal, or other signals or channels) overlap with each other in the time domain, and use different subcarriers in the frequency domain, resulting in a transmission conflict. For example, it is required that the receiving end device use different spatial domain filtering reception methods for the channel state information reference signal A and the PDCCH. In this case, the transmission priority between the channel state information reference signal A and the PDCCH may be determined and indicated to the receiving end device based on the actual load conditions and quality of service of services, thereby achieving dynamic adjustment of the transmission priority.

In some embodiments, frequency-domain resources occupied by the X reference signals overlap with frequency-domain resources occupied by other signals.

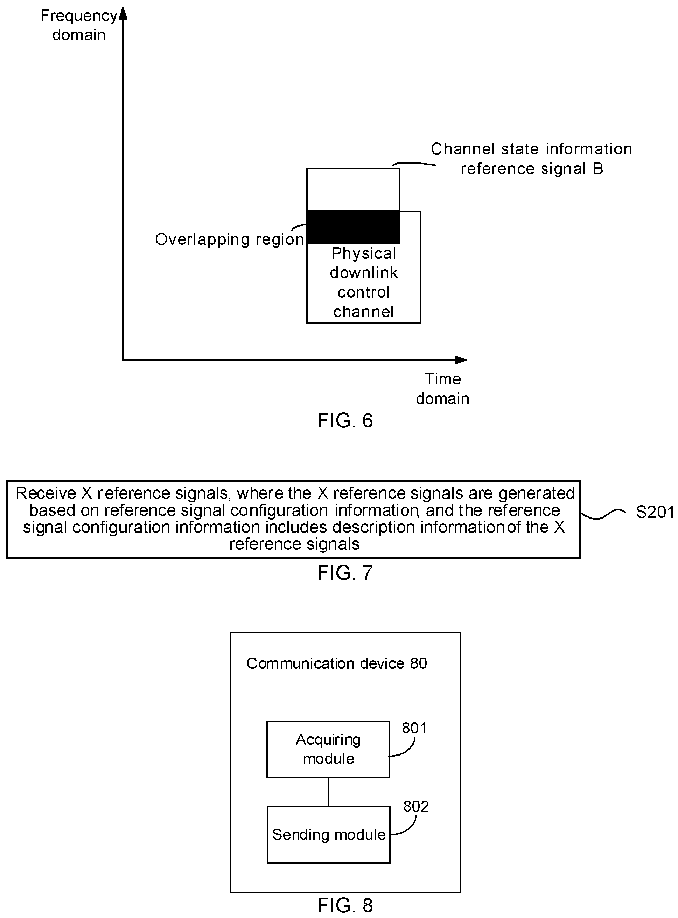

For example, as shown in FIG. 6, a reference signal (e.g., the channel state information reference signal B) and a PDCCH (or a PDSCH, synchronization signal, or other signals or channels) use partially the same subcarriers (e.g., the overlapping region shown in FIG. 6) in the frequency domain, resulting in a transmission conflict. In this case, the transmission priority between the channel state information reference signal B and the PDCCH may be determined and indicated to the receiving end device based on the actual load conditions and quality of service of services, thereby achieving dynamic adjustment of the transmission priority.

### (9) Indication information of the feedback mode for feedback information determined based on the X reference signals

For example, in an example where the reference signal includes the channel state information reference signal, the indication information is used to indicate a feedback mode for the channel state information (i.e. the feedback information described above) generated by the receiving end device (e.g., the terminal) based on the received channel state information reference signal.

In some embodiments, the feedback mode includes independent feedback or joint feedback. For example, the receiving end device independently feeds back channel state information generated based on each channel state information reference signal, where the independent feedback includes independent compression, independent coding and other independent feedback modes. For another example, the receiving end device jointly feeds back channel state information generated based on a plurality of channel state information reference signals, where the joint feedback includes joint compression, joint coding, and other joint feedback modes.

### (10) Description information of the processing mode for all or some of the X reference signals at the receiving end

The description information of the processing mode for all or some of the X reference signals at the receiving end is used to describe a processing mode or a processing mode set for all or some of the X received reference signals at the receiving end device, and the processing mode set includes one or more processing modes. In some embodiments, at least one processing mode includes a linear processing mode and/or a nonlinear processing mode. In an example, the processing mode set may include a linear processing mode, and may further include a nonlinear processing mode.

For example, the transmitting end device sends four channel state information reference signals (e.g., the CSI-RS A, CSI-RS B, CSI-RS C, and CSI-RS D) to the receiving end device, and further sends, to the receiving end device, indication information of processing modes for these four channel state information reference signals. For example, the transmitting end device may send, to the receiving end device, indication information used to indicate a linear processing mode (e.g., one of linear processing modes including a linear minimum mean square error algorithm and Wiener filtering) for the CSI-RS A; indication information used to indicate a nonlinear processing mode (e.g., one of nonlinear processing modes including an iterative algorithm, a neural network, and deep learning) for the CSI-RS B and CSI-RS C; and indication information used to indicate a pre-agreed processing mode for the CSI-RS D. Correspondingly, the receiving end device may, based on the linear processing mode, perform channel measurement, channel estimation, and channel prediction on a channel over which the CSI-RS A is received; based on the nonlinear processing mode, perform channel measurement, channel estimation, and channel prediction on a channel over which the CSI-RS B and CSI-RS C are received; and based on the pre-agreed processing mode, perform channel measurement, channel estimation, and channel prediction on a channel over which the CSI-RS D is received.

For another example, the transmitting end device sends four channel state information reference signals (e.g., the CSI-RS A, CSI-RS B, CSI-RS C, and CSI-RS D) to the receiving end device, and further sends, to the receiving end device, indication information of processing mode sets for these four channel state information reference signals. For example, the transmitting end device may send, to the receiving end device, indication information of a first processing mode set corresponding to the CSI-RS A, indication information of a second processing mode set corresponding to the CSI-RS B, indication information of a third processing mode set corresponding to the CSI-RS C, and indication information of the third processing mode set corresponding to the CSI-RS D.

The first processing mode set includes the linear minimum mean square error algorithm and Wiener filtering, so that the receiving end device may use one of the two processing modes. Correspondingly, the receiving end device may, according to factors such as channel states and quality of service, determine to perform channel measurement, channel estimation, and channel prediction on a channel over which the CSI-RS A is received based on the processing mode including the linear minimum mean square error algorithm or Wiener filtering. The second processing mode set includes the iterative algorithm and neural network, so that the receiving end device may use one of the two processing modes. Correspondingly, the receiving end device may, according to factors such as channel states and quality of service, determine to perform channel measurement, channel estimation, and channel prediction on a channel over which the CSI-RS B is received based on the processing mode including the iterative algorithm or neural network. The third processing mode set includes the linear minimum mean square error algorithm, iterative algorithm, and neural network algorithm (which may include a plurality of models), so that the receiving end device may use one of the three processing modes. Correspondingly, the receiving end device may, according to factors such as channel states and quality of service, determine to perform channel measurement, channel estimation, and channel prediction on a channel over which the CSI-RS C is received based on the processing mode including the linear minimum mean square error algorithm, iterative algorithm, or neural network algorithm. The fourth processing mode set includes a pre-agreed processing mode. Correspondingly, the receiving end device may, based on the pre-agreed processing mode, perform channel measurement, channel estimation, and channel prediction on a channel over which the CSI-RS D is received.

In some embodiments, the transmitting end device may further send, for different ports of the same channel state information reference signal, indication information of different processing modes or different processing mode sets.

In some embodiments, the processing mode is determined based on the power information of the reference signal. For example, the processing mode is related to the power of the channel state information reference signal.

### (11) Indication information of the selection rule for the receiving end to select the processing mode

The indication information is used to indicate, to the receiving end device, a selection rule for selecting a target processing mode from at least one received processing mode (e.g., the processing mode or processing mode set described above). The target processing mode is a processing mode selected from the at least one processing mode.

In some embodiments, the selection rule for selecting the target processing mode from at least one processing mode is determined based on at least one of channel quality information or channel reconstruction quality information. For example, the channel quality information may include at least one of: information (e.g., a signal-to-noise ratio (SNR), a signal-to-interference noise ratio (SINR), and reference signal received power (RSRP) of a channel) describing a channel state between the transmitting end and the receiving end, or statistical distribution of channel parameters. The channel reconstruction quality information may include at least one of: statistical distribution of a reconstructed channel or a similarity between the reconstructed channel and a measurement channel.

For example, the selection rule may include: in response to an accuracy of the reconstructed channel being greater than or equal to 90%, selecting a neural network mode; in response to the accuracy of the reconstructed channel being less than 90%, using a conventional codebook feedback mode. For another example, the selection rule may include: in response to a signal-to-noise ratio being greater than or equal to 15 dB, using the neural network mode; in response to the signal-to-noise ratio being less than 15 dB, using a conventional codebook feedback mode, such as type-1 or type-2 codebook.

### (12) Description information of the selection rule for selecting the target reference signal from the X reference signals

The target reference signal is a reference signal selected by the receiving end device from the X received reference signals for performing feedback.

For example, the receiving end device selects Y channel state information reference signals from the X reference signals (e.g., the channel state information reference signals), to perform channel state information feedback. Herein, Y is a positive integer, and the description information is information for indicating, to the receiving end device, a selection rule for how to select the Y channel state information reference signals from the X channel state information reference signals.

In some embodiments, the selection rule for selecting the target reference signal from the X reference signals includes constraint information for selecting the target reference signal.

For example, the constraint information includes that the CSI-RS A and the CSI-RS C are prohibited from being selected simultaneously. In a case where the receiving end device needs to select two target reference signals from the four received channel state information reference signals, namely, CSI-RS A, CSI-RS B, CSI-RS C, and CSI-RS D, there may be a total of six selectable combinations of the target reference signals: CSI-RS A and CSI-RS B, CSI-RS A and CSI-RS C, CSI-RS A and CSI-RS D, CSI-RS B and CSI-RS C, CSI-RS B and CSI-RS D, and CSI-RS C and CSI-RS D. In combination with the constraint information that the CSI-RS A and the CSI-RS C are prohibited from being selected simultaneously, the combination of CSI-RS A and CSI-RS C is excluded from the selectable combinations of the target reference signals, and the receiving end device may further determine the target reference signals from the remaining five selectable combinations.

### (13) Indication information of the number of the target reference signals

The indication information of the number of the target reference signals is information used to indicate the number of reference signals that the receiving end device is permitted to select from the X reference signals for performing feedback.

For example, the transmitting end device may send, to the receiving end device, information on the maximum number of target reference signals permitted to be selected, or a set of values of the number of target reference signals permitted to be selected.

### (14) Indication information for feeding back the maximum amount of data determined based on the X reference signals

The indication information for feeding back the maximum amount of data determined based on the X reference signals includes information used to indicate the maximum allowed number of bits for the receiving device to use in transmitting feedback information for the reference signals, such as information on the maximum allowed number of bits for transmitting channel state information feedback at the receiving end device. The transmitting end device may indicate, via the indication information, to the receiving device that the maximum allowed number of bits for transmitting channel state information feedback is 20,000, so that the receiving end device may not transmit channel state information exceeding 20,000 bits.

In some embodiments, the reference signal configuration information is indicated via S pieces of signaling.

The S pieces of signaling include at least one of radio resource control (RRC) signaling, media access control (MAC) signaling, or data control information (DCI), and S is a positive integer.

For example, the transmitting end device may send the reference signal configuration information to the receiving end device based on one piece of signaling or a combination of multiple pieces of signaling among the S pieces of signaling. For example, the transmitting end device sends the reference signal configuration information via one piece of RRC signaling, multiple pieces of RRC signaling, multiple pieces of MAC signaling, a combination of at least one piece of RRC signaling, at least one piece of MAC signaling and at least one DCI, or a combination of at least one piece of RRC signaling and at least one piece of MAC signaling.

In some embodiments, the transmitting end device may generate the reference signal configuration information by itself, or acquire the reference signal configuration information via other means.

In S102, the X reference signals are sent based on the reference signal configuration information.

In some embodiments, the transmitting end device may send the X reference signals based on the reference signal configuration information. Correspondingly, the receiving end device may receive the X reference signals. Considering the channel state information reference signal as an example, the receiving end device may generate channel state information based on the X received channel state information reference signals and feed back the channel state information to the transmitting end device.

In some embodiments, channel state information generated based on different reference signals of the X reference signals includes different numbers of elements.

For example, the transmitting end device sends, to the receiving end device, four channel state information reference signals, namely CSI-RS A, CSI-RS B, CSI-RS C, and CSI-RS D. The receiving end device feeds back, based on a channel measurement result of the CSI-RS A, channel state information including channel quality indicator (CQI), rank indicator (RI), and pre-coding matrix indicator (PMI); feeds back, based on a channel measurement result of the CSI-RS B, channel state information including CQI and PMI; and feeds back, based on a channel measurement result of the CSI-RS C, channel state information including PMI.

In some embodiments, the channel state information generated based on the X reference signals includes N parts, and N is a positive integer.

For example, the transmitting end device sends four channel state information reference signals, namely CSI-RS A, CSI-RS B, CSI-RS C, and CSI-RS D. The channel state information generated by the receiving end device based on a channel measurement result of the CSI-RS A includes only one part (e.g., wideband CQI, wideband PMI, RI). Moreover, the channel state information generated by the receiving end device based on a channel measurement result of the CSI-RS B includes two parts, where the first part includes wideband CQI, wideband PMI, and RI, and the second part includes subband PMI and subband CQI.

Based on the technical solutions provided in the present disclosure, the reference signal configuration information includes description information of X reference signals, so that adaptive reference information configuration may be performed based on the actual radio channel environment, resulting in high flexibility to meet requirements in different service scenarios, thereby improving the efficiency and reliability of wireless communication.

In some embodiments, another reference signal configuration method is further provided in the present disclosure, and the method is applied to a receiving end device. As shown in FIG. 7, the method includes the following step.

In S201, X reference signals are received. The X reference signals are generated based on reference signal configuration information, and the reference signal configuration information includes description information of the X reference signals.

Herein, X is a positive integer.

In some embodiments, the reference signal includes a plurality of types of reference signals, such as a channel state information reference signal, a demodulation reference signal, a phase tracking reference signal, and a sounding reference signal.

For example, in an example where the reference signal includes the channel state information reference signal, the receiving end device may, based on X received channel state information reference signals, feed back, to a transmitting end device, channel state information generated based on the X channel state information reference signals.

In some embodiments, the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of the number of the target reference signals; or
indication information for feeding back a maximum amount of data determined based on the X reference signals.

In some embodiments, the relationship information between the ports corresponding to the X reference signals and the other ports of the transmitting end includes: a mapping relationship between the ports corresponding to the X reference signals and the other ports.

In some embodiments, the feedback mode includes independent feedback or joint feedback.

In some embodiments, the processing mode includes a linear processing mode and/or a nonlinear processing mode.

In some embodiments, the processing mode is determined based on the power information of the reference signal.

In some embodiments, the selection rule for selecting the processing mode is determined based on at least one of channel quality information or channel reconstruction quality information.

In some embodiments, the selection rule for selecting the target reference signal from the X reference signals includes constraint information for selecting the target reference signal.

In some embodiments, the X reference signals are determined from a set of G groups of reference signals, where G is a positive integer.

In some embodiments, different reference signals of the X reference signals correspond to the same number of ports; alternatively, different reference signals of the X reference signals correspond to different numbers of ports.

In some embodiments, a reference signal occupies resources of the same size on different ports; alternatively, a reference signal occupies resources of different sizes on different ports.

In some embodiments, ports respectively corresponding to at least two reference signals of the X reference signals overlap with each other.

In some embodiments, time-domain resources occupied by the X reference signals overlap with time-domain resources occupied for transmitting other signals.

In some embodiments, frequency-domain resources occupied by the X reference signals overlap with frequency-domain resources occupied by other signals.

In some embodiments, the receiving end device may receive the X reference signals and generate feedback information of the reference signals.

Considering the channel state information reference signal as an example, the receiving end device may generate channel state information based on the X received channel state information reference signals and feed back the channel state information to the transmitting end device.

In some embodiments, channel state information generated based on different reference signals of the X reference signals includes different numbers of elements.

In some embodiments, the channel state information generated based on the X reference signals includes N parts, and N is a positive integer.

In some embodiments, the reference signal configuration information is indicated via S pieces of signaling.

The S pieces of signaling include at least one of radio resource control (RRC) signaling, media access control (MAC) signaling, or data control information (DCI), and S is a positive integer.

For example, the transmitting end device may send the reference signal configuration information to the receiving end device based on one piece of signaling or a combination of multiple pieces of signaling among the S pieces of signaling. For example, the transmitting end device sends the reference signal configuration information via one piece of RRC signaling, multiple pieces of RRC signaling, multiple pieces of MAC signaling, a combination of at least one piece of RRC signaling, at least one piece of MAC signaling and at least one DCI, or a combination of at least one piece of RRC signaling and at least one piece of MAC signaling. Correspondingly, the receiving end device may receive the reference signal configuration information based on the S pieces of signaling.

In addition, for the detailed description of step S201, reference may be made to the relevant description in steps S101 and S102, and details will not be repeated herein.

Based on the technical solutions provided in the present disclosure, for the reference signals received by the receiving end device, adaptive reference information configuration may be performed based on the actual radio channel environment, resulting in high flexibility, so that the feedback information generated based on the reference signals may meet requirements in different service scenarios.

The solutions provided in the present disclosure are mainly described above from the perspective of interaction between various nodes. It may be understood that, in order to implement the functions described above, the various nodes, such as apparatuses or devices, include corresponding hardware structures and/or corresponding software modules for performing various functions. Those skilled in the art will easily realize that the present disclosure may be implemented in the form of hardware or a combination of hardware and computer software, with reference to the algorithm steps of the examples described in the embodiments disclosed herein. Whether a function is performed by hardware or computer software-driven hardware depends on the specific applications and design constraints of the technical solutions. Professional technicians may use different methods to implement the described functions for each particular application, but such implementation will not be considered beyond the scope of the present disclosure.

In the embodiments of the present disclosure, the communication device may be divided into functional modules according to the method embodiments described above. For example, each functional module may be divided corresponding to each function, or two or more functions may be integrated into one functional module. The integrated module described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

FIG. 8 is a schematic diagram showing components of a communication device provided in the embodiments of the present disclosure. As shown in FIG. 8, the communication device 80 includes an acquiring module 801 and a sending module 802.

In some embodiments, the acquiring module 801 acquires reference signal configuration information, the reference signal configuration information includes description information of X reference signals, where X is a positive integer. The sending module 802 is configured to send the X reference signals based on the reference signal configuration information.

In some embodiments, the reference signal configuration information is indicated by S pieces of signaling, and the S pieces of signaling include at least one of radio resource control (RRC) signaling, media access control (MAC) signaling, or downlink control information (DCI), where S is a positive integer.

In some embodiments, the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of the number of the target reference signals; or
indication information for feeding back a maximum amount of data determined based on the X reference signals.

In some embodiments, the relationship information between the ports corresponding to the X reference signals and the other ports of the transmitting end includes: a mapping relationship between the ports corresponding to the X reference signals and the other ports.

In some embodiments, the feedback mode includes independent feedback or joint feedback.

In some embodiments, the processing mode includes a linear processing mode and/or a nonlinear processing mode.

In some embodiments, the processing mode is determined based on the power information of the reference signal.

In some embodiments, the selection rule for selecting the processing mode is determined based on at least one of channel quality information or channel reconstruction quality information.

In some embodiments, the selection rule for selecting the target reference signal from the X reference signals includes constraint information for selecting the target reference signal.

In some embodiments, the X reference signals are determined from a set of G groups of reference signals, where G is a positive integer.

In some embodiments, different reference signals of the X reference signals correspond to the same number of ports.

In some embodiments, different reference signals of the X reference signals correspond to different numbers of ports.

In some embodiments, a reference signal occupies resources of the same size on different ports.

In some embodiments, a reference signal occupies resources of different sizes on different ports.

In some embodiments, ports respectively corresponding to at least two reference signals of the X reference signals overlap with each other.

In some embodiments, time-domain resources occupied by the X reference signals overlap with time-domain resources occupied for transmitting other signals.

In some embodiments, frequency-domain resources occupied by the X reference signals overlap with frequency-domain resources occupied by other signals.

In some embodiments, channel state information generated based on different reference signals of the X reference signals includes different numbers of elements.

In some embodiments, the channel state information generated based on the X reference signals includes N parts, and N is a positive integer.

For the more detailed description of the acquiring module 801 and the sending module 802, as well as the more detailed description of their various technical features and beneficial effects, reference may be made to the part of the corresponding method embodiments described above, and details will not be repeated herein.

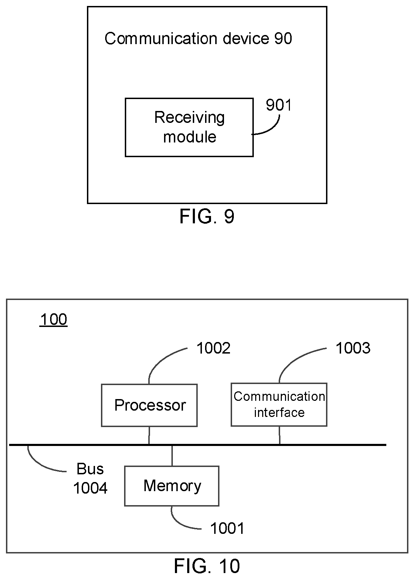

FIG. 9 is a schematic diagram showing components of a communication device provided in the embodiments of the present disclosure. As shown in FIG. 9, the communication device 90 includes a receiving module 901.

In some embodiments, the receiving module 901 is configured to receive X reference signals. The X reference signals are generated based on reference signal configuration information, and the reference signal configuration information includes description information of the X reference signals, where X is a positive integer.

In some embodiments, the reference signal configuration information is indicated by S pieces of signaling, and the S pieces of signaling include at least one of radio resource control (RRC) signaling, media access control (MAC) signaling, or downlink control information (DCI), where S is a positive integer.

In some embodiments, the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of the number of the target reference signals; or
indication information for feeding back a maximum amount of data determined based on the X reference signals.

In some embodiments, the relationship information between the ports corresponding to the X reference signals and the other ports of the transmitting end includes: a mapping relationship between the ports corresponding to the X reference signals and the other ports.

In some embodiments, the feedback mode includes independent feedback or joint feedback.

In some embodiments, the processing mode includes a linear processing mode and/or a nonlinear processing mode. In some embodiments, the processing mode is determined based on the power information of the reference signal.

In some embodiments, the selection rule for selecting the processing mode is determined based on at least one of channel quality information or channel reconstruction quality information. For example, the channel quality information may include at least one of: information (e.g., a signal-to-noise ratio (SNR), a signal-to-interference noise ratio (SINR), and reference signal received power (RSRP) of a channel) describing a channel state between the transmitting end and the receiving end, or statistical distribution of channel parameters. The channel reconstruction quality information may include at least one of: statistical distribution of a reconstructed channel or a similarity between the reconstructed channel and a measurement channel.

In some embodiments, the selection rule for selecting the target reference signal from the X reference signals includes constraint information for selecting the target reference signal.

In some embodiments, the X reference signals are determined from a set of G groups of reference signals, where G is a positive integer.

In some embodiments, different reference signals of the X reference signals correspond to the same number of ports.

In some embodiments, different reference signals of the X reference signals correspond to different numbers of ports.

In some embodiments, a reference signal occupies resources of the same size on different ports.

In some embodiments, a reference signal occupies resources of different sizes on different ports.

In some embodiments, ports respectively corresponding to at least two reference signals of the X reference signals overlap with each other.

In some embodiments, time-domain resources occupied by the X reference signals overlap with time-domain resources occupied for transmitting other signals.

In some embodiments, frequency-domain resources occupied by the X reference signals overlap with frequency-domain resources occupied by other signals.

In some embodiments, channel state information generated based on different reference signals of the X reference signals includes different numbers of elements.

In some embodiments, the channel state information generated based on the X reference signals includes N parts, and N is a positive integer.

For the more detailed description of the receiving module 901, as well as the more detailed description of its various technical features and beneficial effects, reference may be made to the part of the corresponding method embodiments described above, and details will not be repeated herein.

It will be noted that the modules in FIG. 8 or 9 may also be referred to as units. For example, the processing module may be referred to as a processing unit. In addition, in the embodiments shown in FIG. 8 or 9, names of the various modules may also be different from those shown in the figure. For example, the sending module or the receiving module may also be referred to as a communication module.

If the units in FIG. 8 or 9 are implemented in the form of software functional modules and sold or used as an independent product, the units may be stored in a computer-readable storage medium. Based on such understanding, the technical solutions in the embodiments of the present disclosure may be essentially, or a part of the technical solutions in the embodiments of the present disclosure that contributes to the prior art may be, or all or part of the technical solutions may be, embodied in the form of a software product. The computer software product is stored in a storage medium and includes a plurality of instructions, to enable a computer device (which may be a personal computer, a server, or a network device) or processor to perform all or some of the steps of the method in the various embodiments of the present disclosure. The storage medium for storing the computer software product includes various media capable of storing program codes, such as a USB flash disk, a mobile hard disk, a read-only memory (ROM), a random access memory (RAM), a magnetic disk, or an optical disk.

In a case where the functions of the integrated modules described above are implemented in the form of hardware, a schematic diagram showing a structure of a communication device is provided in the embodiments of the present disclosure. As shown in FIG. 10, the communication device 100 includes a processor 1002, a communication interface 1003, and a bus 1004. Optionally, the communication device 100 may further include a memory 1001.

The processor 1002 may implement or execute various exemplary logical blocks, modules, and circuits described with reference to the content in the present disclosure. The processor 1002 may be a central processing unit, a general-purpose processor, a digital signal processor, an application specific integrated circuit, a field programmable gate array, or other programmable logic component, a transistor logic component, a hardware component, or any combination thereof. The processor 1002 may implement or execute various exemplary logical blocks, modules, and circuits described with reference to the content in the present disclosure. The processor 1002 may also be a combination for implementing computing functions, such as a combination of one or more microprocessors, or a combination of a digital signal processor (DSP) and a microprocessor.

The communication interface 1003 is configured to connect with other devices via a communication network. The communication network may be an Ethernet, a radio access network, a wireless local area network (WLAN), or the like.

The memory 1001 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program codes and capable of being accessed by a computer, where the desired program codes have instructions or are in the form of data structure.

As a possible implementation, the memory 1001 may exist independently of the processor 1002, and the memory 1001 may be connected to the processor 1002 via the bus 1004 and configured to store instructions or program codes. When invoking and executing the instructions or program codes stored in the memory 1001, the processor 1002 may perform the method provided in the embodiments of the present disclosure.

In another possible implementation, the memory 1001 may also be integrated with the processor 1002.

The bus 1004 may be an extended industry standard architecture (EISA) bus or the like. The bus 1004 may be classified as an address bus, a data bus, a control bus, and the like. For convenience of representation, only one bold line is used in FIG. 10, but this does not mean that there is only one bus or only one type of bus.

From description of the implementations described above, those skilled in the art will clearly understand that, for convenience and brevity of description, the division of functional modules described above is given by way of example. In practical applications, the functions may be allocated to different functional models to complete as required. That is to say, an internal structure of an apparatus or a device is divided into different functional models, to perform all or part of the functions described above.

A computer-readable storage medium is further provided in the embodiments of the present disclosure. All or part of the processes in the method embodiments described above may be implemented by relevant hardware instructed by computer instructions. The program may be stored in the computer-readable storage medium described above. The program, upon being executed, may include the processes in the various method embodiments described above. The computer-readable storage medium may be a storage unit or a memory in any one of the embodiments described above. The computer-readable storage medium may also be an external storage device of the apparatus or device described above, such as a plug-in hard disk, a smart media card (SMC), a secure digital (SD) card, or a flash card, equipped on the apparatus or device. Furthermore, the computer-readable storage medium may further include both an internal storage unit and external storage device of the apparatus or device described above. The computer-readable storage medium is used to store the computer program described above and other programs and data required by the apparatus or device described above. The computer-readable storage medium may further be used to temporarily store data that has been output or is to be output.

A computer program product including a computer program is further provided in the embodiments of the present disclosure. The computer program product, upon being run on a computer, enables the computer to perform any one of the methods provided in the embodiments described above.

Although the present disclosure is described herein in conjunction with various embodiments, other variations of the disclosed embodiments may be understood and implemented by those skilled in the art by viewing the accompanying drawings, the disclosed contents, and the appended claims during the implementation of the present disclosure claimed to be protected. In the claims, the word "comprise/comprises/comprising/include/includes/including" does not exclude other components or steps, and "a/an" or "one" does not exclude multiple cases. A single processor or other units may implement several functions listed in the claims. Some measures are recited in different dependent claims, but this does not mean that these measures cannot be combined to achieve a favorable effect.

Although the present disclosure is described in conjunction with specific features and embodiments thereof, it is apparent that various modifications and combinations may be made thereto without departing from the spirit and scope of the present disclosure. Accordingly, the specification and accompanying drawings herein are merely exemplary illustration of the present disclosure defined by the appended claims, and are deemed to cover any and all modifications, variations, combinations or equivalents falling within the scope of the present disclosure. Obviously, those skilled in the art may make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. A reference signal configuration method, comprising:
acquiring reference signal configuration information, the reference signal configuration information including description information of X reference signals, and X being a positive integer; and
sending the X reference signal based on the reference signal configuration information.

2. The method according to claim 1, wherein the reference signal configuration information is indicated by S pieces of signaling, the S pieces of signaling include at least one of radio resource control (RRC) signaling, media access control (MAC) signaling, or downlink control information (DCI), and S is a positive integer.

3. The method according to claim 1, wherein the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of a number of target reference signals; or
indication information for feeding back a maximum amount of data determined based on the X reference signals.

4. The method according to claim 3, wherein the relationship information between the ports corresponding to the X reference signals and the other ports of the transmitting end includes: a mapping relationship between the ports corresponding to the X reference signals and the other ports.

5. The method according to claim 3, wherein the feedback mode includes independent feedback or joint feedback.

6. The method according to claim 3, wherein the processing mode includes a linear processing mode and/or a nonlinear processing mode.

7. The method according to claim 3, wherein the processing mode is determined based on the power information of the reference signal.

8. The method according to claim 3, wherein the selection rule for selecting the processing mode is determined based on at least one of channel quality information or channel reconstruction quality information.

9. The method according to claim 3, wherein the selection rule for selecting the target reference signal from the X reference signals includes constraint information for selecting the target reference signal.

10. The method according to claim 1, wherein the X reference signals are determined from a set of G groups of reference signals, and G is a positive integer.

11. The method according to claim 1, wherein different reference signals of the X reference signals correspond to a same number of ports.

12. The method according to claim 1, wherein different reference signals of the X reference signals correspond to different numbers of ports.

13. The method according to claim 1, wherein a reference signal occupies resources of a same size on different ports.

14. The method according to claim 1, wherein a reference signal occupies resources of different sizes on different ports.

15. The method according to claim 1, wherein ports respectively corresponding to at least two reference signals of the X reference signals overlap with each other.

16. The method according to claim 1, wherein time-domain resources occupied by the X reference signals overlap with time-domain resources occupied for transmitting other signals.

17. The method according to claim 1, wherein frequency-domain resources occupied by the X reference signals overlap with frequency-domain resources occupied by other signals.

18. The method according to claim 1, wherein channel state information generated based on different reference signals of the X reference signals includes different numbers of elements.

19. The method according to claim 1, wherein channel state information generated based on the X reference signals includes N parts, and N is a positive integer.

20. A reference signal configuration method, comprising:
receiving X reference signals, the X reference signals being generated based on reference signal configuration information, the reference signal configuration information including description information of the X reference signals, and X being a positive integer.

21. The method according to claim 20, wherein the description information includes at least one of:
identification information of the X reference signals;
resource information of the X reference signals;
sequence information of the X reference signals;
power information of the X reference signals;
quantity information of ports corresponding to the X reference signals;
relationship information between the ports corresponding to the X reference signals and other ports of a transmitting end;
relationship information between ports corresponding to different reference signals of the X reference signals;
transmission priority information of all or some of the X reference signals;
indication information of a feedback mode for feedback information determined based on the X reference signals;
description information of a processing mode for all or some of the X reference signals at a receiving end;
indication information of a selection rule for the receiving end to select the processing mode;
description information of a selection rule for selecting a target reference signal from the X reference signals;
indication information of a number of target reference signals; or
indication information for feeding back a maximum amount of data determined based on the X reference signals.

22. The method according to claim 21, wherein the feedback mode includes independent feedback or joint feedback.

23. The method according to claim 21, wherein the processing mode is determined based on the power information of the reference signal.

24. The method according to claim 21, wherein the selection rule for selecting the processing mode is determined based on at least one of channel quality information or channel reconstruction quality information.

25. The method according to claim 20, wherein the reference signal configuration information is indicated by S pieces of signaling, the S pieces of signaling include at least one of radio resource control (RRC) signaling, media access control (MAC) signaling, or downlink control information (DCI), and S is a positive integer.

26. The method according to claim 20, wherein the X reference signals are determined from a set of G groups of reference signals, and G is a positive integer.

27. The method according to claim 20, wherein channel state information generated based on different reference signals of the X reference signals includes different numbers of elements.

28. The method according to claim 20, wherein channel state information generated based on the X reference signals includes N parts, and N is a positive integer.

29. A communication device, comprising a memory and a processor, wherein the memory is coupled to the processor; the memory is configured to store instructions executable by the processor; the processor, upon executing the instructions, performs the method according to any one of claims 1 to 28.

30. A computer-readable storage medium, having stored computer instructions that, when run on a communication device, enable the communication device to perform the method according to any one of claims 1 to 28.
